# EUROPÄISCHE PATENTANMELDUNG

(11) **EP 1 162 554 A1**
(43) Veröffentlichungstag der Anmeldung: **12.12.2001**
(21) Anmeldenummer: 00112082.3
(22) Anmeldetag: 05.06.2000
(51) Int. Cl.: G06F 17/60

(54) **Verfahren, EDV-System und Computer-Programm zur Ermittlung von Boni für Aktionen von Konsumenten**

(71) Anmelder: Bertelsmann Direkt Marketing Fabrik GmbH, 33310 Gütersloh (DE)
(72) Erfinder: Schmedtmann, Markus, 33330 Gütersloh (DE); Schwegler, Mario, 33335 Gütersloh (DE)
(74) Vertreter: Schüll, Gottfried Dipl.-Phys.

(57) **Zusammenfassung**

Die Erfindung betrifft ein Verfahren, ein EDV-System, ein Computer-Programm sowie ein maschinenlesbares Medium mit gespeichertem Computer-Programm zur Ermittlung von Boni für Aktionen von Konsumenten, bei welchem die Aktionen durch ein EDV-Systeme erfaßt werden, den Aktionen aus dem Vergleich mit Einträgen in einer ersten Datenbank von dem EDV-System Boni zugeordnet werden und die einem Konsumenten zuzuordnenden Boni in einer zweiten Datenbank gespeichert werden. Dieses Verfahren wird in vorteilhafter Weise mit einer Datenbank für Kundeninformationen zur Steuerung von Direktmarketing-Aktionen dadurch verknüpft, daß zu den einem Konsumenten zuzuordnenden, mit Boni verbundenen Aktionen Informationen in einer dritten Datenbank gespeichert werden und von dem EDV-System zumindest aus den in der dritten Datenbank gespeicherten Informationen Kundenensembles über Suchkriterien zu den Informationen selektiert werden.

Zur Veröffentlichung mit der Zusammenfassung wird die einzige Figur vorgeschlagen.

## Beschreibung

Die Erfindung betrifft ein Verfahren, ein EDV-System, ein Computer-Programm sowie ein maschinenlesbares Medium mit einem Computer-Programm zur Ermittlung von Boni für Aktionen von Konsumenten, bei welchem die Aktionen durch ein EDV-System erfaßt werden, den Aktionen aus dem Vergleich mit Einträgen in einer ersten Datenbank von dem EDV-System Boni zugeordnet werden und die einem Konsumenten zuzuordnenden Boni in einer zweiten Datenbank gespeichert werden.

Derartige Verfahren sind aus dem Stand der Technik in einer Vielzahl von Ausgestaltungen bekannt und werden zur Bindung der Kunden an ein Unternehmen genutzt. Bekannte Beispiele sind die sogenannten Meilenprogramme von Luftfahrtgesellschaften bei denen den Fluggästen auf ihrem sogenannten Meilenkonto für jeden Flug, in der Regel abhängig von der überwundenen Distanz, Boni in Form von sogenannten Meilen gutgeschrieben werden. Diese Meilen können von den Kunden der Luftfahrtgesellschaften gegen eine Vielzahl von Prämien, wie beispielsweise Extraflüge, aber auch Waren, wie etwa Reisegepäck, eingetauscht werden. Das Bestreben der Konsumenten oder Kunden möglichst viele Meilen zu sammeln, um möglichst hochwertige Prämien zu erlösen, führt zu dem erwünschten Effekt der Kundenbindung an in diesem Fall die Luftfahrtgesellschaft. Diese bekannten sogenannten Meilenprogramme beschränken sich im wesentlichen auf eine einzelne Luftfahrtgesellschaft oder einen Verbund von Luftfahrtgesellschaften und teilweise auf verwandte Transportdienstleistungen, wie beispielsweise das Vermieten von Mietwagen.

Mit der Zunahme des Angebots von über das Internet abrufbaren Dienstleistungen und Produkten haben sich auch in diesem Bereich des sogenannten Ecommerce, dort in der Regel ebenfalls als Meilenprogramme bezeichnete, Kundenbindungsprogramme etabliert. Diese Kundenbindungsprogramme im Bereich Ecommerce arbeiten in der Regel produkt- und dienstleistungsübergreifend, d.h. die Boni, die zentral in Prämien eingetauscht werden können, werden von einer Vielzahl von Unternehmen vergeben, die beispielsweise Mobiltelefone, Audio/Video-Datenträger, Bücher, Kleidung oder dergleichen im Internet zum Kauf anbieten.

Ein Verfahren zur Ermittlung von Boni für ein solches Kundenbindungsprogramm im Internet ist beispielsweise in der WO 97/22058 beschrieben. Bei diesem Verfahren wird nach dem Kauf eines Kunden bei einem an das Kundenbindungsprogramm angeschlossenen Unternehmen durch den Vergleich mit Einträgen in einer ersten Datenbank, die beispielsweise unterschiedlich hohen Kaufpreisen eine unterschiedlich hohe Anzahl von Bonuspunkten zuordnet, ein diesem Kauf zuzuordnender Bonus ermittelt. Dieser Bonus wird anschließend zusammen mit einer Identifikation des Käufers bzw. Konsumenten an den Betreiber des Kundenbindungsprogrammes übermittelt, wo zunächst eine Verifikation der Identität des Kundens erfolgt und anschließend der ermittelte Bonus einem Bonuskonto des Konsumenten hinzugefügt wird. Sobald der Konsument auf diesem Bonuskonto hinreichend viele Boni gesammelt hat, besteht für ihn die Möglichkeit, diese gegen eine Prämie einzutauschen. Weiter gewähren die Betreiber der genannten Kundenbindungssysteme dem Kunden bzw. Konsumenten üblicherweise die Möglichkeit, nach entsprechender Identifikation Einsicht in das Bonuskonto zu nehmen. Die Rückvergütung für die von dem Betreiber des Kundenbindungsprogrammes vergebenen Prämien erfolgt in der Regel in regelmäßigen Abständen zwischen dem Betreiber des Kundenbindungsprogrammes und den angeschlossenen Unternehmen. Auch durch diese Art von Kundenbindungsprogrammen wird für die an das Kundenbindungsprogramm angeschlossenen Unternehmen der gewünschte Kundenbindungseffekt erzielt.

Aus dem Stand der Technik ist es weiter bekannt, in sogenannten Adressdatenbanken Adressen und demographische Informationen zu potentiellen Konsumenten zu sammeln, und diese zum Zwecke der Steuerung von Werbemaßnahmen sogenannten Direktmarketing-Aktionen, insbesondere dem Versenden von Werbebriefen, zu vermieten oder zu verkaufen.

Ausgehend von dem zuvor beschriebenen Stand der Technik liegt der Erfindung nun die Aufgabe zu Grunde, ein Verfahren, ein EDV-System, bzw. ein Computer-Programm bzw. ein machinenlesbares Medium mit einem Computer-Programm zur Ermittlung von Boni für Aktionen von Konsumenten zur Verfügung zu stellen, mit welchem sich durch einfache technische Maßnahmen die Möglichkeiten zur Gewinnung von Kundenprofilen für die Steuerung von Direktmarketing-Aktionen stark verbessern lassen.

Erfindungsgemäß ist die zuvor hergeleitete und aufgezeigte Aufgabe dadurch gelöst, daß zu den einem Konsumenten zuzuordnenden, mit Boni verbundenen Aktionen Informationen in einer dritten Datenbank gespeichert werden und von dem EDV-System zumindest aus den in der dritten Datenbank gespeicherten Informationen Kundenensembles über Suchkriterien zu den Informationen selektiert werden.

Durch das erfindungsgemäße Speichern von nicht ausschließlich bonusbezogenen Informationen und die erfindungsgemäß vorgesehene Möglichkeit zur Selektion von Konsumenten anhand dieser Informationen wird zum Zwecke der Steuerung von Direktmarketing-Aktionen Datenmaterial gewonnen, welches eine wesentlich höhere Zielgenauigkeit und damit die Minimierung von Streuverlusten bei der Steuerung von Direktmarketing-Aktionen gewährleistet. Die Erfindung nutzt dabei die Tatsache, daß die Konsumenten zur Teilnahme an einem lukrativen Kundenbindungsprogramm aller Voraussicht nach dazu bereit sind, die im Rahmen des Kundenbindungsprogrammes durch die von den Konsumenten ausgelösten Aktionen entstehenden Informationen speichern und verwerten zu lassen.

Die erfindungsgemäß gewonnenen Daten können beispielsweise entweder von dem Betreiber des Kundenbindungsprogrammes direkt zur Steuerung von Direktmarketing-Kampagnen verwendet werden oder aber von diesem, wie bekannt, auch vermietet oder verkauft werden.

Bei der Beschreibung der Erfindung ist unter einem EDV-System jedwedes zur elektronischen Datenverarbeitung geeignete System, beispielsweise auch ein verteiltes EDV-System, bei dem verschiedene Funktionen an verschiedenen Orten von verschiedenen Einheiten übernommen werden, zu verstehen. Unter einer Datenbank im Sinne der Erfindung ist die Möglichkeit zum geordneten Ablegen von Daten, insbesondere Konsumentendaten und Informationen zu Aktionen von Konsumenten, Boni und dergleichen in einem EDV-System zu verstehen. Wenn in der Beschreibung der Erfindung von mehreren Datenbanken die Rede ist, so können die in bezug auf die Erfindung beschriebenen Funktionen der Datenbanken durchaus auch durch ein einziges zentral oder verteilt angeordnetes Datenbanksystem verwirklicht werden.

Um die Größe der benötigten Datenbanken zur Speicherung der erwünschten Informationen nicht unnötig überzustrapazieren, werden bevorzugt zu den jeweiligen Aktionen ausschließlich Rückschlüsse auf den Konsumententyp erlaubende Informationen gespeichert.

In diesem Zusammenhang erscheint es beispielsweise vorteilhaft, als Informationen sogenannte Aktionstypen, wie Kauf, Vertrag, Telefonat, Beantwortung von Fragebögen, Mitgliederwerbung, Lesen von Emails, Beantworten von Emails, Anklicken von Werbeflächen und/oder das Aufrufen von Seiten im Internet zu speichern.

Als beispielsweise besonders hilfreich zur Steuerung von Direktmarketing-Aktionen sind zumindest die Informationen Aktionszeit und/oder -datum, Wert der Aktion, Aktionstyp und/oder zumindest die von der Aktion betroffene Produkt- oder Dienstleistungsgattung zu nennen. Diese Informationen gewährleisten eine treffsichere Selektierbarkeit von Konsumentenensembles aus den insgesamt erfaßten Konsumenten nach sogenannten Zielgruppenprofilen.

Ist das EDV-System hierzu geeignet, werden die Aktionen von Konsumenten vorzugsweise mit Hilfe des EDV-Systems vorgenommen und von dem EDV-System unmittelbar erfaßt.

Dies ist beispielsweise der Fall bei den bekannten Kundenbindungsprogrammen im Bereich Ecommerce.
Alternativ oder kumulativ können die Datenbanken auch mit Informationen zu Aktionen, die nicht mit Hilfe des EDV-Systems vorgenommen werden, dadurch versorgt werden, daß Informationen zu außerhalb des EDV-Systems vorgenommenen Aktionen in das EDV-System eingegeben werden. Hierüber wird die Erfassung der gewünschten Informationen auch bei Aktionen der Konsumenten gewährleistet, die beispielsweise konventionell am Ladentisch erfolgen.

Schließlich lassen sich die gespeicherten Informationen zu einzelnen Konsumenten dadurch weiter vervollständigen, daß in einer vierten Datenbank auf anderen Wegen gewonnene Zusatzinformationen zu den Konsumenten gespeichert werden und von dem EDV-System nach Verknüpfung der dritten und vierten Datenbank Konsumentenensembles über Suchkriterien zu den Informationen und Zusatzinformationen selektiert werden. Hierdurch wird die Kombination von bestehenden Kundendatenbanken mit den erfindungsgemäß gewonnenen Informationen zu einzelnen Konsumenten möglich.

Besonders vorteilhaft lassen sich die erfindungsgemäß gewonnenen Informationen dadurch nutzen, daß durch das EDV-System an vorgegebenen Kundenensembles gerichtete Direktmarketing-Aktionen an anhand der dritten und/oder vierten Datenbank selektierte Kundenensembles veranlaßt werden. Dadurch, daß das gleiche EDV-System die Direktmarketing-Aktionen veranlaßt, welches auch für die Sammlung der Informationen zum Konsumentenverhalten verantwortlich ist, wird eine besonders einfache Auswertung der Informationen und Steuerung der Direktmarketing-Aktionen gewährleistet. Auch kann bei diesem Ausführungsbeispiel in besonders einfacher Form die Reaktion der ausgewählten Kundenensembles auf die von dem EDV-System veranlaßten Direktmarketing-Aktionen wieder als Aktion des Konsumenten interpretiert werden und die hieraus resultierenden Informationen in die Datenbasis des EDV-Systems aufgenommen werden. Dies ist selbstverständlich auch bei getrennt arbeitenden EDV-Systemen möglich, jedoch aufwendiger.

Da die erfindungsgemäß gesammelten Informationen zu Kundenaktionen eine sehr feine Selektierung von Konsumentenensembles ermöglicht, eignen sich als Direktmarketing-Aktionen insbesondere die Versendung von Emails oder Briefen, die in stark personalisierter Form erstellt werden können.

Die Erfindung betrifft weiter ein EDV-System zur Ermittlung von Boni für Aktionen von Konsumenten zur Verwirklichung eines Verfahrens wie es in verschiedenen Ausgestaltungen soeben beschrieben wurde.

Als einen Teil eines EDV-Systems betrifft die Erfindung darüber hinaus ein Computer-Programm zur Ermittlung von Boni für Aktionen von Konsumenten mit Programmbefehlen für ein EDV-System zur Verwirklichung eines in verschiedenen Ausgestaltungen oben beschriebenen Verfahrens auf dem EDV-System.

Schließlich betrifft die Erfindung als einen selbständig handhabbaren Teil eines EDV-Systems ein soeben beschriebenes Computer-Programm gespeichert auf einem maschinenlesbaren Medium.

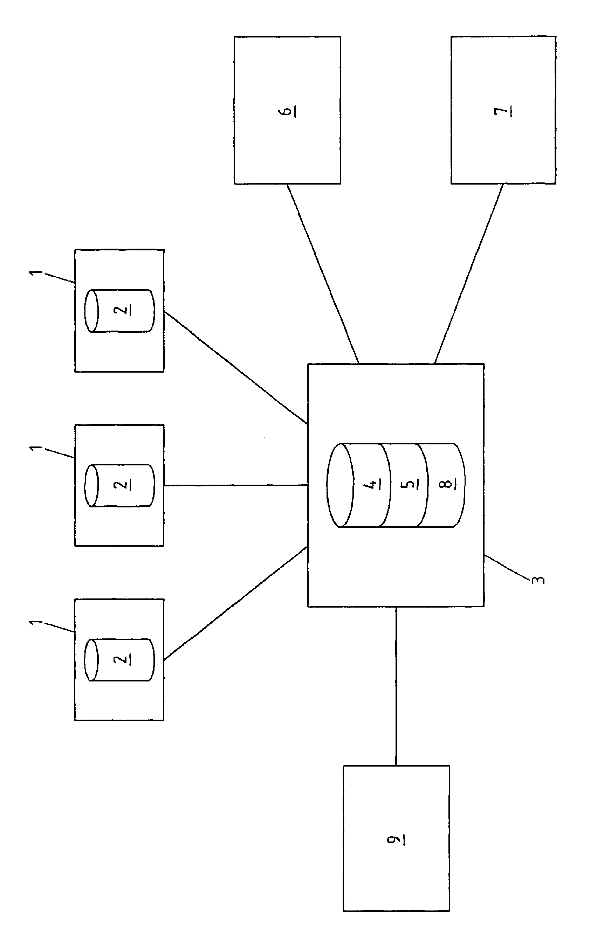

Es gibt nun eine Vielzahl von Möglichkeiten, das erfindungsgemäße Verfahren, das erfindungsgemäße EDV-System, das erfindungsgemäße Computer-Programm und das erfindungsgemäße maschinenlesbare Medium mit gespeichertem Computer-Programm zur Ermittlung von Boni für Aktionen von Konsumenten auszugestalten und weiterzubilden. Hierzu wird beispielsweise einerseits verwiesen auf die dem Patentanspruch 1 nachgeordneten Patentansprüche andererseits auf die Beschreibung eines Ausführungsbeispiels in Verbindung mit der Zeichnung.

In der Zeichnung zeigt die einzige Figur ein Ausführungsbeispiel eines EDV-Sytems zur Ermittlung von Boni für Aktionen von Konsumenten.

Das in der einzigen Figur dargestellte EDV-System weist zunächst drei lokale Datenerfassungssysteme 1 auf, die bei den an einem Kundenbindungsprogramm beteiligten Unternehmen aufgestellt werden. Diese Datenerfassungssysteme werden beispielsweise von einem Teil der Hardware gebildet, die bei dem jeweiligen Unternehmen die Funktionalität zur Verwirklichung von Ecommerce-Angeboten verwirklicht. In diese Datenerfassungssysteme 1 sind erste Datenbanken 2 integriert, die der Aktion eines Konsumenten bei dem jeweiligen Unternehmen einen bestimmten Bonus zuordnen. Darüber hinaus erfassen die Datenerfassungsysteme 1 die erfindungsgemäß gespeicherten und verwerteten Informationen über die Aktionen von Konsumenten in dem jeweiligen Ecommerce-Angebot des angeschlossenen Unternehmens.

Die von den Datenerfassungssystemen 1 einem Konsumenten zugeordneten Boni und die bei Aktionen von Konsumenten erfaßten Informationen werden bei dem dargestellten Ausführungsbeispiel an eine zentrale Datenverwaltungseinheit 3, als weiteren Teil des EDV-Systems, weitergeleitet, die einerseits die Kundenidentifikation verifiziert und andererseits die einem Konsumenten zugeordneten Boni in einer zweiten Datenbank 4 speichert.

Erfindungsgemäß werden zu den einem Konsumenten zuzuordnenden, mit Boni verbundenen Aktionen die von den Datenerfassungssystemen 1 erfaßten Informationen in einer dritten Datenbank 5 gespeichert. Bei Bedarf werden von der zentralen Datenverwaltungseinheit 3 zumindest aus den in der dritten Datenbank 5 gespeicherten Informationen Konsumentenensembles über Suchkriterien zu den Informationen selektiert.

Das in der einzigen Figur dargestellte EDV-System weist entsprechend einer Ausgestaltung der Erfindung eine nicht im einzelnen dargestellte Möglichkeit zur Eingabe von Informationen zu außerhalb des EDV-Systems vorgenommenen Aktionen, symbolisiert durch einen Ladentisch 6 auf.

Zur weiteren Vervollständigung der in der zentralen Datenverwaltungseinheit 3 gespeicherten Informationen zu Konsumentenprofilen weist die zentrale Datenverwaltungseinheit 3 weiter eine wiederum nicht im einzelnen dargestellte Schnittstelle zu auf anderen Wegen gewonnenen Kundeninformationssammlungen 7 auf, über die die in den Kundeninformationssammlungen 7 vorhandenen Zusatzinformationen in einer vierten Datenbank 8 abgelegt werden können. Bei diesen Zusatzinformationen handelt es sich beispielsweise um bereits in der Vergangenheit auf anderen Wegen, beispielsweise Fragebogenaktionen usw., erhaltene Informationen zum Kundenverhalten.

Schließlich weist das in der einzigen Figur dargestellte Ausführungsbeispiel eines erfindungsgemäßen EDV-Systems eine Verbindung zu einer Internetseite 9 auf, über die die an dem Kundenbindungsprogramm teilnehmenden Konsumenten Informationen beispielsweise zu den bereits gesammelten Boni und mögliche Prämien abfragen können.

## Patentansprüche

1. Verfahren zur Ermittlung von Boni für Aktionen von Konsumenten, bei welchem die Aktionen durch ein EDV-System erfaßt werden, den Aktionen aus dem Vergleich mit Einträgen in einer ersten Datenbank von dem EDV-System Boni zugeordnet werden und die einem Konsumenten zuzuordnenden Boni in einer zweiten Datenbank gespeichert werden,
**dadurch gekennzeichnet, daß** zu den einem Konsumenten zuzuordnenden, mit Boni verbundenen Aktionen Informationen in einer dritten Datenbank gespeichert werden und von dem EDV-System zumindest aus den in der dritten Datenbank gespeicherten Informationen Kundenensembles über Suchkriterien zu den Informationen selektiert werden.

2. Verfahren nach Anspruch 1,
**dadurch gekennzeichnet, daß** zu den jeweiligen Aktionen Rückschlüsse auf den Konsumententyp erlaubende Informationen gespeichert werden.

3. Verfahren nach Anspruch 1 oder 2,
**dadurch gekennzeichnet, daß** als Informationen die Aktionstypen, Kauf, Vertrag, Telefonat, Beantwortung von Fragebögen, Mitgliederwerbung, Lesen von Emails, Beantworten von Emails, Anklicken von Werbeflächen und/oder das Aufrufen von Seiten im Internet gespeichert werden.

4. Verfahren nach einem der Ansprüche 1 bis 3,
**dadurch gekennzeichnet, daß** als Informationen zumindest Aktionszeit und/oder -datum, Wert der Aktion, Aktionstyp und/oder zumindest die von der Aktion betroffene Produkt- oder Dienstleistungsgattung gespeichert werden.

5. Verfahren nach einem der Ansprüche 1 bis 4,
**dadurch gekennzeichnet, daß** die Aktionen von Konsumenten mit Hilfe des EDV-Systems vorgenommen werden und von dem EDV-System unmittelbar erfaßt werden.

6. Verfahren nach einem der Ansprüche 1 bis 5,
**dadurch gekennzeichnet, daß** Informationen zu außerhalb des EDV-Systems vorgenommenen Aktionen in das EDV-System eingegeben werden.

7. Verfahren nach einem der Ansprüche 1 bis 6,
**dadurch gekennzeichnet, daß** in einer vierten Datenbank auf anderen Wegen gewonnene Zusatzinformationen zu den Konsumenten gespeichert werden und von dem EDV-System nach Verknüpfung der dritten und vierten Datenbank Konsumentenensembles über Suchkriterien zu den Informationen und Zusatzinformationen selektiert werden.

8. Verfahren nach einem der Ansprüche 1 bis 7,
**dadurch gekennzeichnet, daß** durch das EDV-System vorgegebene Kundenensembles gerichtete Direktmarketing-Aktionen an anhand der dritten und/oder vierten Datenbank selektierte Kundenensembles veranlaßt werden.

9. Verfahren nach Anspruch 8,
**dadurch gekennzeichnet, daß** als Direktmarketing-Aktionen Emails oder Briefe versandt werden.

10. EDV-System zur Ermittlung von Boni für Aktionen von Konsumenten zur Verwirklichung eines Verfahrens nach einem der Ansprüche 1 bis 9.

11. Computer-Programm zur Ermittlung von Boni für Aktionen von Konsumenten mit Programmbefehlen für ein EDV-System zur Verwirklichung eines Verfahrens nach einem der Ansprüche 1 bis 9 auf dem EDV-System.

12. Computer-Programm nach Anspruch 11, gespeichert auf einem maschinenlesbaren Medium.
